# EUROPEAN PATENT APPLICATION

(11) **EP 1 271 840 A1**
(43) Date of publication of application: **02.01.2003**
(21) Application number: 01440181.4
(22) Date of filing: 21.06.2001
(51) Int. Cl.: H04L 12/10

(54) **Method for remotely powering at least one board or card interconnected with an other board or card**

(71) Applicant: ALCATEL, 75008 Paris (FR)
(72) Inventor: Mouton, Michel, 67100 Strasbourg (FR); Gass, Raymond, 67150 Bolsenheim (FR)
(74) Representative: Menzietti, Domenico, Dipl.-Ing.

(57) **Abstract**

The present invention concerns a method for remotely powering at least one board or card interconnected with an other board or card, via a link point to point comprising at least two pairs of wires or lines, said cards or boards being mounted in a common backpanel and said other board or card incorporating a power source and/or being connected to an external power source, characterised in that electrical power is supplied over said linking wires or lines (4, 5) by means of a phantom circuit using both pairs of wires or lines (4 and 5).

## Description

The present invention concerns generally electronic systems or apparatuses, in particular multi-board systems and more specifically the electrical power supply of such systems, and provides a method for remotely powering at least one board of such a system and a corresponding communication system comprising at least two boards and making use of said method.

In multi-board systems and apparatus as indicated before, the various power signals are nowadays mainly carried on dedicated wires or planes in the backpanels receiving and interconnecting said boards. Other existing solutions use expensive transmission technology in bus configuration.

These existing solutions are bulky, require additionnal dedicated links and are adapted for only one physical and geographical arrangement of the boards, without any flexibility.

Furthermore all boards are generally electrically fed by a central and single conversion and adaptation unit, which is linked to external power supply lines and provides electrical power matching the needs of said boards. This also means that when said unit is out of order none of the supplied boards can function.

In relation with communication systems, the existing solutions are further not yet optimized for voice, data and video integration mainly in small and medium sized systems and require dedicated signals for clocks, synchronization and power distribution.

The main purpose of the invention consists thus in proposing a solution which overcomes the aforementioned limitations and disadvantages regardless whether the boards are all located in the same shelf or at least partially linked together by wires.

Therefore, a first object of the present invention is a method for remotely powering at least one board or card interconnected with an other board or card, via a link point to point comprising at least two pairs of wires or lines, said cards or boards being mounted in a common back panel and said other board or card incorporating a powersource and/or being connected to an external power source, characterised in that electrical power is supplied over said linking wires or lines by means of a phantom circuit using both pairs of wires or lines.

A second object of the invention is a communication system comprising at least two boards or cards interconnected via a point to point link comprising at least two pairs of wires or lines, said cards or boards being mounted in a common back panel and said other board or card incorporating a powersource and/or being connected to an external power source, characterised in that said at least one other board or card is supplied with electrical power over said linking wires or lines by means of a phantom circuit using both pairs of wires or lines.

The present invention will be better understood thanks to the following description and drawings of an embodiment of said invention given as a non limitative example thereof.

Figure 1 is a symbolic representation of the configuration of a communication system according to the invention comprising a plurality of boards, and,

Figure 2 is a shematic view showing the power supply between two boards mounted in the same rack, according to one embodiment of the invention.

Generally, the invention concerns a method for remotely powering at least one board or card 3 interconnected with an other board 2 or card, via a link point to point comprising at least two pairs of wires or lines 4, 5, said cards or boards 2, 3 being mounted in a common backpanel and said other board or card 2 incorporating a power source and/or being connected to an external power source.

According to the invention electrical power is supplied over said linking wires or lines 4, 5 by means of a phantom circuit using both pairs of wires or lines 4 and 5.

Thus, the power supply does not make use of specific transmission means and does not need any dedicated wires or lines, in addition to the existing ones.

Concerning more specifically, but not exclusively, power supply in relation with data exchanging boards, such as in a communication system or apparatus, said pairs of lines comprise one pair of data transmission wires 4 and one pair of data reception wires 5.

Advantageously, the external power supply is directly injected into the phantom circuit, without any treatment such as adaptation, correction or conversion.

The invention can be advantageously applied when the board 2 incorporating or connected to an electrical power source is interconnected with more than one other board 3 to be remotely powered.

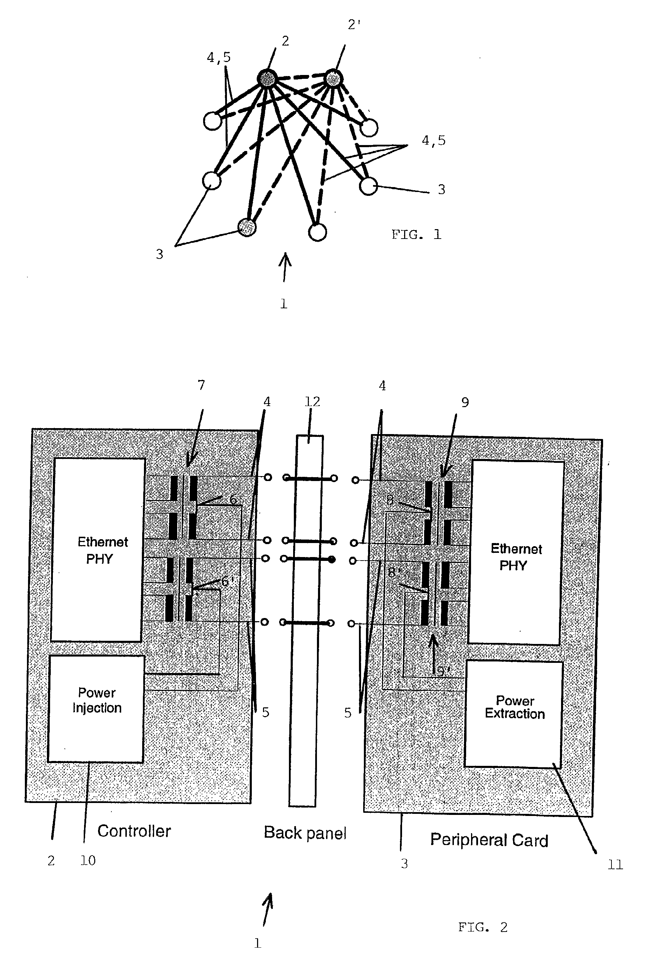

Preferably, the board 2 incorporating or connected to an electrical power source (not shown) corresponds to a controller board and is interconnected with a plurality of peripheral boards 3 according to a single or a double star configuration (Figure 1). Indeed the controller board 2 forming generally the most essential component of any system, it accomodates the power unit or is directly connected to an external power supply line.

In case of a double star configuration, there is provided a standby controller board 2' which also incorporates and/or is connected to a power source and which is linked to the boards 3 to be remotely powered in the same way as the controller board 2, the selection of the power supply from either said boards 2 and 2' being operated by implementing an exclusive OR function.

According to a prefered embodiment of the invention, shown on figure 2 of the enclosed drawings, the boards 2, 3 are interconnected by means of 10/100/1000 Base - T Ethernet link(s), electrical power being, on the one hand, injected at middle points 6, 6' of transformer windings 7, 7' connected with the pairs of transmission and reception lines 4, 5 on the board 2 comprising or connected to the power source and, on the other hand, extracted at middle points 8, 8' of transformer windings 9, 9' connected to the pairs of transmission and reception lines 4, 5 on the board(s) 3 to be remotely powered.

The present invention also concerns a communication system 1 comprising at least two boards or cards 2, 3 interconnected via a point to point link comprising at least two pairs of wires or lines 4, 5, characterised in that said at least one other board or card 3 is supplied with electrical power over said linking wires or lines 4, 5 by means of a phantom circuit using both pairs of wires or lines 4, 5 (Figures 1 and 2).

According to a feature of the invention, the communication system 1 comprises a controller board 2 incorporating or connected with an electrical power source and a plurality of peripheral boards 3 interconnected with said controller board 2 via point to point links, said connecting pairs of lines 4, 5 comprising one pair of data transmission lines 4 and one pair of data reception lines 5.

In a prefered embodiment of the invention, shown on figure 2 of the drawings, the point to point links between boards 2, 3, incorporating the wires or lines 4, 5, are 10/100/1000 Base-T Ethernet links, the controller board 2 comprising a power injection module or circuit 10 connected to the middle points 6, 6' of the transformer windings 7, 7' forming Ethernet interface components for said board 2 and connected with the pairs of transmission and reception wires or lines 4, 5 and each of the other interconnected boards 3 comprising a power extraction module or circuit 11 connected to the middle points 8, 8' of the transformer windings 9,9' forming Ethernet interface components for the considered board 3 and connected with the pairs of transmission and reception wires or lines 4, 5.

Thus, the invention uses advantageously 10/100/1000 Base-T Ethernet links to interconnect systems boards 2,3. Power supply is provided over data pairs using a phantom power method on Tx and Rx pairs 4, 5 (emerging 802.3 af standard) from a central point. It should be noted that Ethernet links feature clock distribution and clock recovery mechanism and do not require synchronization lines to handle packet transmission.

According to an other feature of the invention shown on figure 1 of the drawings, the boards 2, 3 can be interconnected according to a single or a double star configuration.

Thus, the controller board 2 constitutes a central point from which power feeding is injected into the system 1 towards the peripheral boards 3.

As also shown on figure 1, in case of a double star configuration, a standby controller board 2' can be provided which could be interconnected with the peripheral boards 3 in the same way as the actual controller board 2 (Main Controller) and able to supply said boards 3 with power using the principle of the present invention, in case of failure of the actual or main controller board 2.

According to a first construction alternative of the communication system 1, partially and shematically shown on figure 2, all boards 2, 3 are mounted in a single rack or shelf, the interconnection links between boards being provided on the back panel or backplane 12.

In this case, the invention takes benefit of 10/100/1000 Base-T links in the back plane using point to point links between boards using Ethernet Interface components (PHY, transformers...). The traces in the back panel are controlled impedance differential lines adapted to Ethernet transmission characteristics.

A practical embodiment of this first alternative can be seen in the so-called Crystal Technology for back panels developped by the Applicant.

According to a second construction alternative of the communication system 1, not shown on the enclosed drawings, at least some peripheral boards 3 are mounted in separate, possibly individual, boxes or racks and linked to the controller board 2 or to the rack or shelf comprising said controller board 2 and the remaining peripheral boards 3 by means of Ethernet cables.

In both previous cases, each link uses only four wires or lines and subsequently four connector points to interconnect boards which leads to very low cost and very simple back panel structure or wiring configuration.

In a most advantageous application of the present invention, the communication system 1 consists of an Internet Protocol based communication system 1, for example a IP-PBX or IP-PABX.

Thus, as can be appreciated from the previous description, the invention does not only propose a remote power feeding concept for boards or cards which is simple and reduces materials and costs, by also a concept which can be applied regardless of the physical / geographical arrangement of the boards, even if said arrangement envolves.

Furthermore, the inventive solution also allows to switch on the cards of a system one after the other, in a given order, and thus to avoid the usual current peak when switching on simultaneously all cards of a system fed by a central feeding unit.

Finally, the inventive solution also allows to order a hardware reset (by cutting the power feeding) of a determined single card, when the latter is for example "crashed".

The present invention is, of course, not limited to the preferred embodiment described and represented herein, changes can be made or equivalents used without departing from the scope of the invention.

## Claims

1. Method for remotely powering at least one board or card interconnected with an other board or card, via a link point comprising at least two pairs of wires or lines, said cards or boards being mounted in a common backpanel and said other board or card incorporating a power source and/or being connected to an external power source, **characterised in that** electrical power is supplied over said linking wires or lines (4, 5) by means of a phantom circuit using both pairs of wires or lines (4 and 5).

2. Method according to claim 1, **characterised in that** said pairs of lines comprise one pair of data transmission lines (4) and one pair of data reception lines (5).

3. Method according to any of claims 1 and 2, **characterised in that** the external power supply is directly injected into the phantom circuit, without any treatment such as adaptation, correction or conversion.

4. Method according to any of claims 1 to 3, **characterised in that** the board (2) incorporating or connected to an electrical power source is interconnected with more than one other board (3) to be remotely powered.

5. Method according to any of claims 1 to 4, **characterised in that** the board (2) incorporating or connected to an electrical power source corresponds to a controller board and is interconnected with a plurality of peripheral boards (3) according to a single or double star configuration.

6. Method according to any of claims 1 to 5, **characterised in that** the boards (2, 3) are interconnected by means of 10/100/1000 Base - T Ethernet link(s), electrical power being, on the one hand, injected at middle points (6, 6') of transformer windings (7, 7') connected with the pairs of transmission and reception lines (4, 5) on the board (2) comprising or connected to the power source and, on the other hand, extracted at middle points (8, 8') of transformer windings (9, 9') connected to the pairs of transmission and reception lines (4, 5) on the board(s) (3) to be remotely powered.

7. Communication system comprising at least two boards or cards interconnected via a point to point link comprising at least two pairs of wires or lines, said cards or boards being mounted in a common backpanel and said other board or card incorporating a power source and/or being connected to an external power source, **characterised in that** said at least one other board or card (3) is supplied with electrical power over said linking wires or lines (4, 5) by means of a phantom circuit using both pairs of wires or lines (4, 5).

8. Communication system according to claim 7, **characterised in that** it comprises a controller board (2) incorporating or connected with an electrical power source and a plurality of peripheral boards (3) interconnected with said controller board (2) via point to point links, said connecting pairs of lines (4, 5) of each link comprising one pair of data transmission lines (4) and one pair of data reception lines (5).

9. Communication system according to claim 8, **characterised in that** the point to point links between boards (2, 3), incorporating the wires or lines (4, 5), are 10/100/1000 Base-T Ethernet links, the controller board (2) comprising a power injection module or circuit (10) connected to the middle points (6, 6') of the transformer windings (7, 7') forming Ethernet interface components for said board (2) and connected with the pairs of transmission and reception wires or lines (4, 5) and each of the other interconnected boards (3) comprising a power extraction module or circuit (11) connected to the middle points (8, 8') of the transformer windings (9,9') forming Ethernet interface components for the considered board (3) and connected with the pairs of transmission and reception wires or lines (4, 5).

10. Communication system according to any of claims 6 to 8, **characterised in that** the boards (2, 3) are interconnected according to a single or double star configuration.

11. Communication system according to claims 7 and 9, **characterised in that**, in case of a double star configuration, there is provided a standby controller board (2') which also incorporates and/or is connected to a power source and which is linked to the boards (3) to be remotely powered in the same way as the controller board (2), the selection of the power supply from either said boards (2 and 2') being operated by implementing an exclusive OR function.

12. Communication system according to any of claims 6 to 10, **characterised in that** all boards (2, 3) are mounted in a single rack or shelf, all interconnection links between boards being provided on the back panel or backplane (12).

13. Communication system according to any of claims 7 to 10, **characterised in that** at least some peripheral boards (3) are mounted in separate, possibly individual, boxes or racks and linked to the controller board (2) or to the rack or shelf comprising said controller board (2) and the remaining peripheral boards (3) by means of Ethernet cables.

14. Communication system according to any of claims 6 to 12, **characterised in that** it consists of an Internet Protocol based communication system (1), for example a IP-PBX or IP-PABX.
